# FASCICULE DE BREVET EUROPEEN

(11) **EP 4 580 925 B1**
(45) Date de publication et mention de la délivrance du brevet: **21.10.2026**
(21) Numéro de dépôt: 23739625.4
(22) Date de dépôt: 19.06.2023
(51) Int. Cl.: B60W 30/19, F16H 61/04, F16H 63/50, F16H 61/682

(54) **PROCÉDÉ D'INHIBITION DE FONCTIONS DE CONTRÔLE DE COUPLE D'UN MOTEUR THERMIQUE LORS D'UN CHANGEMENT DE RAPPORT DE VITESSE DESCENDANT**
VERFAHREN ZUR VERHINDERUNG VON DREHMOMENTSTEUERFUNKTIONEN EINES VERBRENNUNGSMOTORS BEIM HERUNTERSCHALTEN
METHOD FOR INHIBITING TORQUE CONTROL FUNCTIONS OF A COMBUSTION ENGINE DURING A DOWNSHIFT

(30) Priorité: 29.08.2022 FR 2208613
(43) Date de publication de la demande: 09.07.2025
(73) Titulaire: Stellantis Auto SAS, 78300 Poissy (FR)
(72) Inventeur: BILLER, David, 90400 MOVAL (FR); ROYER, Claude, 78500 SARTROUVILLE (FR); EL HAILA, Rajae, BOUSKOURA, 25100 (MA); LAUNAY, Cedric, 78680 EPONE (FR); MILHAU, Yohan, 78630 ORGEVAL (FR)
(74) Mandataire: PSIP
(86) Numéro de dépôt international: PCT/FR2023/050894
(87) Numéro de publication internationale: WO 2024/047289

(56) Documents cités:
- EP-A1- 3 287 672
- FR-A1- 3 074 534
- US-A1- 2019 367 009

## Description

La présente invention porte sur un procédé d'inhibition de fonctions de contrôle de couple d'un moteur thermique lors d'un changement de rapport de vitesse descendant. L'invention trouve une application particulièrement avantageuse avec les véhicules automobiles munis d'un moteur à combustion interne et d'une boîte de vitesses manuelle.

Dans un véhicule automobile, la boîte de vitesses permet de transmettre la puissance générée par le moteur aux roues motrices du véhicule en démultipliant plus ou moins la vitesse de rotation d'un volant d'inertie du moteur lié mécaniquement au vilebrequin.

Dans le cas d'un véhicule à boîte de vitesses manuelle, la boîte de vitesses est reliée d'une part au volant d'inertie, via un premier arbre d'entrainement (appelé "arbre primaire") et un dispositif d'embrayage relié au volant d'inertie par un disque d'embrayage, et d'autre part aux roues motrices du véhicule, via un deuxième arbre d'entrainement (appelé "arbre secondaire") et un système de transmission. Le premier arbre primaire et le deuxième arbre secondaire sont reliés entre eux par une pluralité de pignons d'engrenage définissant une pluralité de rapports de transmission permettant de démultiplier le couple transmis par l'arbre primaire à l'arbre secondaire.

Lors d'un changement de rapport de vitesse par le conducteur, ce dernier relâche tout d'abord la pédale d'accélération et enfonce la pédale d'embrayage, ce qui a pour effet de désaccoupler le volant d'inertie du moteur et l'arbre primaire de la boîte de vitesses en écartant le disque d'embrayage du volant d'inertie. Le conducteur change alors de rapport de vitesse à l'aide du levier de vitesse puis relâche la pédale d'embrayage tout en enfonçant de nouveau la pédale d'accélération.

Lorsque la pédale d'embrayage est relâchée, le disque d'embrayage entre à nouveau en contact avec le volant d'inertie dans une phase dite de "glissement", pendant laquelle le disque glisse sur le volant d'inertie, jusqu'à atteindre une position d'engagement (dite "de collage") dans laquelle le disque d'embrayage est solidaire du volant d'inertie en rotation. En d'autres termes, le couple de l'arbre primaire de la boîte de vitesses est égal au couple transmis par l'embrayage durant toute la phase de glissement puis égal au couple transmis par le moteur à l'embrayage lorsque la position d'engagement a été atteinte et que le dispositif d'embrayage est à l'état fermé.

Lors d'un changement de rapport de vitesse montant, il peut arriver que le couple du volant d'inertie commandé par la pédale d'accélération, c'est-à-dire par le conducteur, soit significativement inférieur au couple fourni par le disque d'embrayage. Une telle discontinuité de couple peut générer un choc suivi de rebonds dans la chaîne de traction lors de l'engagement du disque d'embrayage avec le volant d'inertie. Afin de résoudre ce problème, il est connu de contrôler le moteur thermique de façon à augmenter le couple du volant moteur par rapport au couple demandé par le conducteur via le contrôle de la pédale d'accélération. Il est également connu de limiter le couple du volant d'inertie pendant un changement de rapport de vitesse montant dans le cas où le conducteur accélère de façon trop importante avant la fermeture de la chaîne de traction.

Toutefois, il a été observé que la stratégie peut être appliquée à tort lors d'un changement de rapport descendant alors que le moteur est dans une phase de coupure d'injection de carburant. Or, l'ajout de couple engendre une réinjection ce carburant, ce qui a pour effet d'augmenter la consommation de carburant ainsi que les émissions de particules polluantes du moteur thermique tout en détériorant l'agrément de conduite. Par ailleurs, l'activation à tort d'une fonction de limitation de couple pourrait créer une chute de couple pendant le changement de rapport de vitesse descendant engendrant également un désagrément de conduite.

En outre l'état de la technique est connu du document US2019367009A.

L'invention vise à remédier efficacement aux inconvénients précités en proposant un procédé de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, ledit procédé comprenant :
- une étape de placement, par enfoncement d'une pédale d'embrayage, du disque d'embrayage dans une position de retrait par rapport au volant d'inertie,
- une étape de changement de rapport de vitesse de la boîte de vitesses à l'aide d'un levier de vitesse,
- une étape de déplacement, par relâchement progressif de la pédale d'embrayage, du disque d'embrayage vers une position d'engagement de manière à entrer dans une phase de glissement jusqu'à ce que le disque d'embrayage atteigne la position d'engagement sur le volant d'inertie,
- une étape de détection d'un changement de rapport de vitesse descendant,
ledit procédé comportant en outre :
- une étape d'inhibition pendant la phase de glissement du disque d'embrayage d'une fonction d'ajout de couple ou d'une fonction de limitation de couple visant respectivement à augmenter ou réduire un couple du volant d'inertie par rapport à un couple souhaité par le conducteur.

L'invention permet ainsi d'éviter une dégradation de la consommation de carburant lors d'un changement de rapport de vitesse descendant tout en limitant les émissions de particules polluantes du moteur thermique. L'invention permet également d'améliorer l'agrément de conduite lors d'un changement de rapport de vitesse en évitant les à-coups susceptibles d'être engendrés par l'activation intempestive de la fonction d'ajout ou de limitation de couple.

Selon une mise en œuvre de l'invention, la détection du changement de rapport de vitesse descendant est effectuée avant que le disque d'embrayage atteigne la position d'engagement sur le volant d'inertie.

Selon une mise en œuvre de l'invention, un rapport de vitesse est détecté par estimation via les étapes suivantes :
- une étape de détermination d'un régime de l'arbre primaire de la boîte de vitesses,
- une étape de détermination d'un régime de l'arbre secondaire de la boîte de vitesses, et
- une étape d'estimation d'un rapport de vitesse engagé à partir d'un calcul d'un ratio entre le régime de l'arbre primaire et le régime de l'arbre secondaire.

Selon une mise en œuvre de l'invention, ledit procédé comporte une étape de mise en œuvre d'au moins une cartographie établissant une correspondance entre des plages de ratios et des rapports de vitesse correspondants.

Selon une mise en œuvre de l'invention, une donnée de sortie de la cartographie est appliquée en entrée d'une machine d'état prenant également en compte un signal issu d'un capteur de neutre.

Selon une mise en œuvre de l'invention, ledit procédé comporte une étape de confirmation d'un changement de rapport de vitesse en vérifiant qu'une donnée de sortie de la machine d'état est stable pendant une durée prédéterminée.

L'invention a également pour objet un calculateur de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, ledit calculateur étant configuré pour détecter un changement de rapport de vitesse descendant, et pour inhiber pendant une phase de glissement du disque d'embrayage une fonction d'ajout de couple ou une fonction de limitation de couple visant respectivement à augmenter ou réduire un couple du volant d'inertie par rapport à un couple du volant d'inertie souhaité par le conducteur.

Selon une réalisation de l'invention, le calculateur est configuré pour effectuer une détection du changement de rapport descendant avant que le disque d'embrayage atteigne la position d'engagement sur le volant d'inertie.

L'invention concerne en outre un véhicule automobile comportant un calculateur tel que précédemment défini.

Selon une réalisation de l'invention, le véhicule automobile comporte une boîte de vitesses manuelle.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un véhicule automobile mettant en œuvre le procédé selon l'invention d'inhibition de fonctions de contrôle de couple d'un moteur thermique lors d'un changement de rapport de vitesse descendant ;
[Fig. 2] La figure 2 est un diagramme des étapes du procédé selon l'invention d'inhibition de fonctions de contrôle de couple d'un moteur thermique lors d'un changement de rapport de vitesse descendant ;
[Fig. 3] La figure 3 est un diagramme des modules fonctionnels permettant de déterminer un rapport de vitesse engagé.

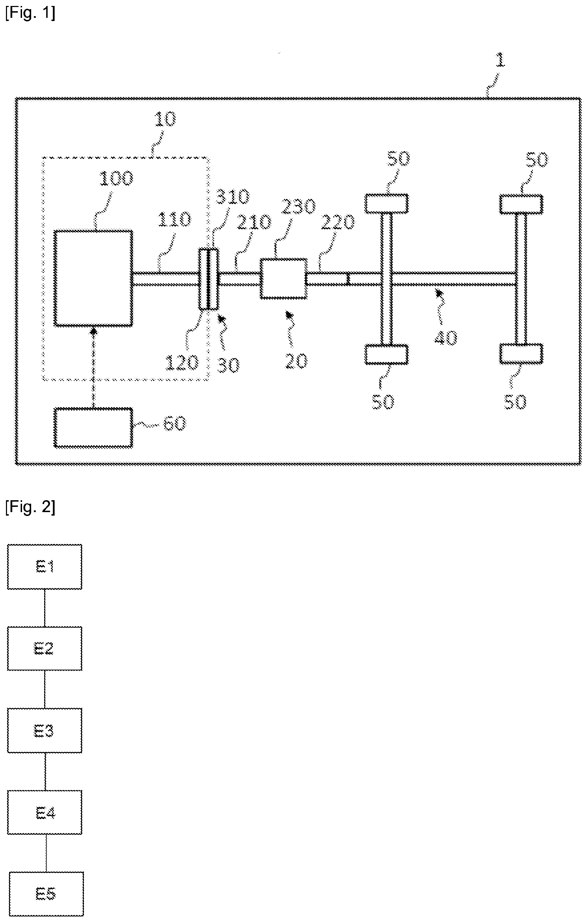

La figure 1 montre un véhicule 1 à moteur 10 thermique et à boîte de vitesses 20 manuelle. La boîte de vitesses 20 est dépourvue de capteur de grille permettant de détecter le rapport de vitesse engagé. La boîte de vitesses 20 ou le levier de vitesse peuvent comporter un capteur de neutre permettant de détecter la position neutre (aucun rapport engagé). Le véhicule 1 comprend également un dispositif d'embrayage 30, un système de transmission 40, une pluralité de roues 50 et un calculateur 60 de contrôle du moteur 10.

Le moteur 10 comprend un bloc moteur 100 comportant une pluralité de cylindres dans chacun desquels est brulé un mélange de carburant et d'air afin d'entraîner en rotation un vilebrequin 110 qui est monté de manière solidaire avec un volant d'inertie 120.

La boîte de vitesses 20 comprend un arbre primaire 210 et un arbre secondaire 220 reliés entre eux par une pluralité de pignons d'engrenage 230 permettant de démultiplier le couple transmis par l'arbre primaire 210 à l'arbre secondaire 220. La sélection du pignon, appelée rapport de vitesse, est réalisée par le conducteur (non représenté) du véhicule 1 à l'aide du levier de vitesse (non représenté).

Le dispositif d'embrayage 30 comprend un disque d'embrayage 310, monté de manière solidaire avec l'arbre primaire 210 de la boîte de vitesses 20. Un déplacement du disque d'embrayage 310 est commandé par une pédale d'embrayage actionnable par le conducteur du véhicule 1. Le disque d'embrayage 310 est apte à être déplacé entre une position de d'engagement du disque d'embrayage 310 avec le volant d'inertie 120, lorsque le conducteur n'appuie pas ou appuie peu sur la pédale d'embrayage (le dispositif d'embrayage 30 est alors à l'état fermé), et une position de retrait dans laquelle le volant d'inertie 120 n'est plus en contact avec le disque d'embrayage 310, lorsque le conducteur appuie suffisamment sur la pédale d'embrayage (le dispositif d'embrayage 30 est alors à l'état ouvert).

Lorsque le dispositif d'embrayage 30 est engagé avec le volant d'inertie 120 (i.e. lorsque le disque d'embrayage 310 est en position d'engagement), le couple généré par le moteur 10 est transmis à l'arbre primaire 210 via le vilebrequin 110 et le disque d'embrayage 310 puis démultiplier via les pignons d'engrenage 230 jusqu'à l'arbre secondaire 220 qui le transmet aux roues 50 via le système de transmission 40.

Lorsque le disque d'embrayage 310 se déplace d'une position de retrait vers la position d'engagement et entre en contact avec le volant d'inertie 120, le disque d'embrayage 310 glisse tout d'abord sur le volant d'inertie 120, dans une phase dite "de glissement", avant d'atteindre la position d'engagement. Ce cas de figure se produit notamment lorsque le conducteur relâche la pédale d'embrayage après un changement de rapport de vitesse.

Le calculateur 60 permet de contrôler le moteur 10, notamment les injections de carburant dans les cylindres du moteur 10. Le calculateur 60 est également apte à contrôler le couple du volant d'inertie 120 du moteur 10 lors d'un changement de rapport de vitesse.

Le calculateur 60 est apte à mettre en œuvre le procédé selon l'invention d'inhibition d'une fonction d'ajout ou de limitation de couple lors d'un changement de rapport de vitesse descendant. Ce procédé est décrit ci-après en référence avec la figure 2.

Tout d'abord, dans une étape E1, lorsque le conducteur souhaite réaliser un passage de rapport de vitesse, il enfonce la pédale d'embrayage, ce qui a pour effet de placer le disque d'embrayage 310 dans une position de retrait par rapport au volant d'inertie 120.

Le conducteur effectue un changement de rapport de vitesse dans une étape E2. A cet effet, le conducteur désengage manuellement un rapport de vitesse initial à l'aide du levier de vitesse puis passe un rapport de vitesse cible.

Le calculateur 60 détecte dans une étape E3 que le changement de rapport de vitesse est un changement de rapport de vitesse descendant, c'est-à-dire que le rapport de vitesse cible est inférieur au rapport de vitesse initial. Ainsi, dans le cas où le rapport de vitesse initial est le rapport N, le rapport de vitesse cible est le rapport N-1.

Dans une étape E4, le conducteur relâche progressivement la pédale d'embrayage dans le but de ré-embrayer le disque d'embrayage 310 avec le volant d'inertie 120. Ce faisant, le disque d'embrayage 310 se déplace tout d'abord vers la position d'engagement de manière à entrer dans une phase de glissement du disque d'embrayage 310 sur le volant d'inertie 120.

Dans une étape E5, le calculateur 60 inhibe pendant la phase de glissement du disque d'embrayage 310 une fonction d'ajout de couple ou une fonction de limitation de couple visant respectivement à augmenter ou réduire un couple du volant d'inertie 120 par rapport à un couple du volant d'inertie 120 souhaité par le conducteur. Le couple du volant d'inertie 120 souhaité par le conducteur correspond à une volonté d'accélération de la part du conducteur déterminée à partir d'un enfoncement de la pédale d'accélération. Autrement dit, le calculateur 60 inhibe les fonctions de contrôle de couple au niveau du volant d'inertie 120 lors d'un changement de rapport descendant effectué manuellement par le conducteur.

La détection du changement de rapport descendant est effectuée avant que le disque d'embrayage 310 atteigne la position d'engagement sur le volant d'inertie 120.

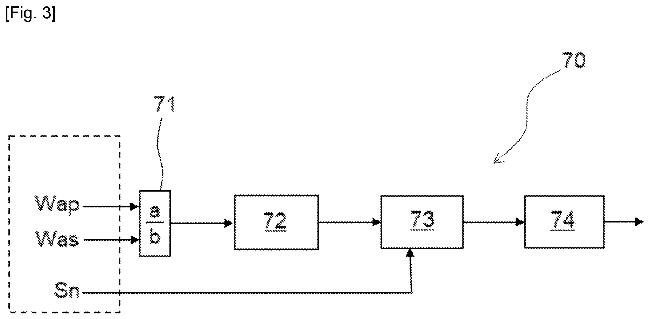

Pour une boîte de vitesses 20 dépourvue de capteur de grille, le changement de rapport de vitesse descendant est détecté au moyen de la fonction 70 illustrée sur la figure 3 qui permet d'estimer un rapport de vitesse engagé.

A cet effet, le calculateur 60 détermine un régime Wap de l'arbre primaire 210 de la boîte de vitesses 20. Le régime Wap de l'arbre primaire 210 de la boîte de vitesse 20 peut être déterminé à partir du régime du moteur thermique 10 mesuré au moyen d'un capteur dédié. En variante, il est possible d'utiliser un capteur de mesure de la vitesse de rotation Wap de l'arbre primaire 210.

Le calculateur 60 détermine également un régime de l'arbre secondaire 220 de la boîte de vitesses 20. Le régime de l'arbre secondaire 220 est déterminé à partir de la vitesse de rotation des roues du véhicule automobile mesuré au moyen d'un capteur dédié. En variante, il est possible d'utiliser un capteur de mesure de la vitesse de rotation Was de l'arbre secondaire 220.

Le régime Wap de l'arbre primaire 210 et le régime Was de l'arbre secondaire 220 sont appliqués en entrée d'un module de calcul 71 permettant de calculer un ratio entre ces deux régimes Wap et Was. Ce ratio de régime pourra être égal à Wap/Was ou inversement à Was/Wap.

Le résultat du module de calcul 71 est appliqué en entrée d'au moins une cartographie 72 établissant une correspondance entre des plages de ratios et des rapports de vitesse correspondants.

La sortie de la cartographie 72 est appliquée en entrée d'une machine d'état 73 prenant également en compte un signal Sn issu du capteur de neutre. Cette machine d'état 73 tient compte du fait que le capteur de neutre détectant une position neutre (aucun rapport engagé) est une condition d'exclusion pour l'engagement d'un rapport de vitesse.

Le module 74 permet de confirmer un changement de rapport de vitesse en vérifiant qu'une donnée de sortie de la machine d'état 73 est stable pendant une durée prédéterminée.

## Revendications

1. Procédé de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), ledit procédé comprenant :
- une étape de placement, par enfoncement d'une pédale d'embrayage, du disque d'embrayage (310) dans une position de retrait par rapport au volant d'inertie (120),
- une étape de changement de rapport de vitesse de la boîte de vitesses (20) à l'aide d'un levier de vitesse,
- une étape de déplacement, par relâchement progressif de la pédale d'embrayage, du disque d'embrayage (310) vers une position d'engagement de manière à entrer dans une phase de glissement jusqu'à ce que le disque d'embrayage (310) atteigne la position d'engagement sur le volant d'inertie (120),
- une étape de détection d'un changement de rapport de vitesse descendant,
**caractérisé en ce que** ledit procédé comporte en outre:
- une étape d'inhibition pendant la phase de glissement du disque d'embrayage (310) d'une fonction d'ajout de couple ou d'une fonction de limitation de couple visant respectivement à augmenter ou réduire un couple du volant d'inertie (120) par rapport à un couple souhaité par le conducteur.

2. Procédé selon la revendication 1, **caractérisé en ce que** la détection du changement de rapport de vitesse descendant est effectuée avant que le disque d'embrayage (310) atteigne la position d'engagement sur le volant d'inertie (120).

3. Procédé selon la revendication 1 ou 2, **caractérisé en ce qu'**un rapport de vitesse est détecté par estimation via les étapes suivantes :
- une étape de détermination d'un régime (Wap) de l'arbre primaire (210) de la boîte de vitesses (20),
- une étape de détermination d'un régime (Was) de l'arbre secondaire (Was) de la boîte de vitesses (20), et
- une étape d'estimation d'un rapport de vitesse engagé à partir d'un calcul d'un ratio entre le régime (Wap) de l'arbre primaire (210) et le régime (Was) de l'arbre secondaire (220).

4. Procédé selon la revendication 3, **caractérisé en ce qu'**il comporte une étape de mise en œuvre d'au moins une cartographie (72) établissant une correspondance entre des plages de ratios et des rapports de vitesse correspondants.

5. Procédé selon la revendication 4, **caractérisé en ce qu'**une donnée de sortie de la cartographie (72) est appliquée en entrée d'une machine d'état (73) prenant également en compte un signal (Sn) issu d'un capteur de neutre.

6. Procédé selon la revendication 5, **caractérisé en ce qu'**il comporte une étape de confirmation d'un changement de rapport de vitesse en vérifiant qu'une donnée de sortie de la machine d'état (73) est stable pendant une durée prédéterminée.

7. Calculateur (60) de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), **caractérisé en ce que** ledit calculateur (60) est configuré pour détecter un changement de rapport de vitesse descendant, et pour inhiber pendant une phase de glissement du disque d'embrayage (310) une fonction d'ajout de couple ou une fonction de limitation de couple visant respectivement à augmenter ou réduire un couple du volant d'inertie (120) par rapport à un couple du volant d'inertie (120) souhaité par le conducteur.

8. Calculateur selon la revendication 7, **caractérisé en ce qu'**il est configuré pour effectuer une détection du changement de rapport descendant avant que le disque d'embrayage (310) atteigne la position d'engagement sur le volant d'inertie (120).

9. Véhicule automobile comportant un calculateur (60) défini selon la revendication 7 ou 8.

10. Véhicule automobile selon la revendication 9, **caractérisé en ce qu'**il comporte une boîte de vitesses (20) manuelle.

## Patentansprüche

1. Verfahren zum Steuern eines Motors (10) eines Kraftfahrzeugs (1) mit Handschaltgetriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei das Verfahren aufweist:
- einen Schritt, bei dem die Kupplungsscheibe (310) in eine zurückgezogene Stellung relativ zum Schwungrad (120) gebracht wird, indem ein Kupplungspedal eingedrückt wird,
- ein Schritt des Gangwechsels des Getriebes (20) mittels eines Schalthebels,
- einen Schritt, in dem die Kupplungsscheibe (310) durch allmähliches Lösen des Kupplungspedals in eine Eingriffsposition bewegt wird, um in eine Schlupfphase einzutreten, bis die Kupplungsscheibe (310) die Eingriffsposition am Schwungrad (120) erreicht,
- einen Schritt zur Erkennung eines Gangwechsels in den Sinkflug,
Verfahren, **dadurch gekennzeichnet, dass** es ferner umfasst:
- einen Schritt, bei dem während der Schlupfphase der Kupplungsscheibe (310) eine Drehmomentaddierungs- bzw. Drehmomentbegrenzungsfunktion zum Erhöhen bzw. Verringern eines Drehmoments des Schwungrades (120) gegenüber einem vom Fahrer gewünschten Drehmoment unterdrückt wird.

2. Verfahren nach Anspruch 1, **dadurch gekennzeichnet, dass** die Erfassung der Abwärtsgangänderung vor Erreichen der Eingriffsposition der Kupplungsscheibe (310) am Schwungrad (120) erfolgt.

3. Verfahren nach Anspruch 1 oder 2, **dadurch gekennzeichnet, dass** ein Geschwindigkeitsverhältnis durch Schätzung durch die folgenden Schritte erfasst wird:
- einen Schritt zur Bestimmung einer Drehzahl (Wap) der Hauptwelle (210) des Getriebes (20),
- einen Schritt zur Bestimmung einer Drehzahl (Was) der Nebenwelle (Was) des Getriebes (20) und
- einen Schritt zur Schätzung eines eingelegten Übersetzungsverhältnisses aus einer Berechnung eines Verhältnisses zwischen der Drehzahl (Wap) der Primärwelle (210) und der Drehzahl (Was) der Sekundärwelle (220).

4. Verfahren nach Anspruch 3, **dadurch gekennzeichnet, dass** es einen Schritt der Durchführung wenigstens einer Abbildung (72) umfasst, die eine Übereinstimmung zwischen Verhältnisbereichen und entsprechenden Geschwindigkeitsverhältnissen herstellt.

5. Verfahren nach Anspruch 4, **dadurch gekennzeichnet, dass** ein Ausgangswert der Abbildung (72) an den Eingang einer Zustandsmaschine (73) angelegt wird, die auch ein Signal (Sn) eines Neutralsensors berücksichtigt.

6. Verfahren nach Anspruch 5, **dadurch gekennzeichnet, dass** es einen Schritt des Bestätigens eines Gangwechsels durch Überprüfen, ob ein Ausgangswert der Zustandsmaschine (73) für eine vorbestimmte Zeitdauer stabil ist, umfasst.

7. Steuerungsrechner (60) für einen Motor (10) eines Kraftfahrzeugs (1) mit manuellem Getriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, **dadurch gekennzeichnet, dass** der Rechner (60) so konfiguriert ist, dass er eine absteigende Gangänderung erfasst und anhängend unterdrückt Eine Schlupfphase der Kupplungsscheibe (310) ist eine Drehmomentaddierfunktion bzw. eine Drehmomentbegrenzungsfunktion zur Erhöhung bzw. Verringerung eines Drehmoments des Schwungrades (120) gegenüber einem vom Fahrer gewünschten Drehmoment des Schwungrades (120).

8. Rechner nach Anspruch 7, **dadurch gekennzeichnet, dass** er so konfiguriert ist, dass er eine Erfassung des Abwärtsgangwechsels ausführt, bevor die Kupplungsscheibe (310) die Eingriffsposition am Schwungrad (120) erreicht.

9. Kraftfahrzeug mit einem Rechner (60) nach Anspruch 7 oder 8.

10. Kraftfahrzeug nach Anspruch 9, **dadurch gekennzeichnet, dass** es ein Handgetriebe (20) aufweist.

## Claims

1. A method of controlling an engine (10) of a motor vehicle (1) having a manual transmission (20), the engine (10) comprising a flywheel (120) connected via a clutch device (30) to a primary shaft (210) of the transmission (20), the clutch device (30) comprising a clutch disk (310), the method comprising:
- a step in which the clutch disk (310) is brought into a retracted position relative to the flywheel (120) by pressing in a clutch pedal,
- a gear change step of the transmission (20) by means of a shift lever,
- a step in which the clutch disk (310) is moved into an engaged position by gradually releasing the clutch pedal in order to enter a slip phase until the clutch disk (310) reaches the engaged position on the flywheel (120),
- a step to detect a change of gear into descent,
a method **characterized in that** it further comprises:
- a step in which, during the slippage phase of the clutch disk (310), a torque adding or limiting function is suppressed for increasing or decreasing a torque of the flywheel (120) relative to a torque desired by the driver.

2. Method according to Claim 1, **characterized in that** the downward gear change is detected before the clutch disk (310) reaches the engagement position on the flywheel (120).

3. Method according to claim 1 or 2, **characterized in that** a speed ratio is detected by estimation by the following steps:
- a step for determining a speed (Wap) of the main shaft (210) of the transmission (20),
- a step for determining a speed (Was) of the countershaft (Was) of the transmission (20), and
- a step for estimating an applied transmission ratio from a calculation of a ratio between the speed (Wap) of the primary shaft (210) and the speed (Was) of the secondary shaft (220).

4. Method according to claim 3, **characterized in that** it comprises a step of performing at least one mapping (72) which establishes a correspondence between ratio ranges and corresponding speed ratios.

5. Method according to Claim 4, **characterized in that** an output value of the image (72) is applied to the input of a state machine (73) which also takes into account a signal (Sn) of a neutral sensor.

6. Method according to claim 5, **characterized in that** it comprises a step of confirming a gear change by checking whether an output value of said state machine (73) is stable for a predetermined period of time.

7. Control computer (60) for an engine (10) of a motor vehicle (1) having a manual transmission (20), the engine (10) comprising a flywheel (120) connected to a primary shaft (210) of the transmission (20) via a clutch device (30), the clutch device (30) comprising a clutch disk (310), **characterized in that** the computer (60) is configured to detect and suspend a decreasing gear change A slip phase of the clutch disk (310) is a torque adding function for increasing or decreasing a torque of the flywheel (120) relative to a torque of the flywheel desired by the driver (120)

8. Computer according to claim 7, **characterized in that** it is configured to detect the downshift before the clutch disk (310) reaches the engaged position on the flywheel (120).

9. Motor vehicle with a computer (60) according to claim 7 or 8.

10. Motor vehicle according to Claim 9, **characterized in that** it has a manual transmission (20).
